# EUROPEAN PATENT APPLICATION

(11) **EP 2 219 119 A1**
(43) Date of publication of application: **18.08.2010**
(21) Application number: 10001429.9
(22) Date of filing: 11.02.2010
(51) Int. Cl.: G06F 17/30

(54) **Method for preprocessing and displaying web page, mobile electronic device, and operation interface thereof**

(30) Priority: 16.02.2009 TW 98104835
(71) Applicant: HTC Corporation, Taoyuan County 330 (TW)
(72) Inventor: Yang, Chih-Wei, Taoyuan City Taoyuan Country 330 (TW); Chang, Wen-Chi, Taoyuan City Taoyuan Country 330 (TW); Lu, Kuang-Rong, Taoyuan City Taoyuan Country 330 (TW)
(74) Representative: Carstens, Dirk Wilhelm

(57) **Abstract**

A method for preprocessing and displaying web page, a mobile electronic device, and an operation interface thereof are provided. In the method, an interested web site address corresponding to an update rule is defined. Then, a web page source data of the interested web site address is downloaded according to the update rule. The web page source data or a data structure generated by parsing the web page source data is stored, wherein the data structure can be displayed by the browser. When the interested web site address is selected, the browser parses the web page source data or displays a web content of the interested web site address according to the data structure. By preprocessing the interested web site address concerned by users, the speed of opening the web page content thereof is increased and the efficiency of browsing web page can be significantly improved.

## Description

### BACKGROUND OF THE INVENTION

### Field of the Invention

A method for enhancing web browsing performance is provided, and more particularly, to a method and an application in connection therewith for preprocessing specific web site addresses so as to accelerate displaying the web page content.

### Description of Related Art

With improvement of mobile technology, there are more and more mobile electronic devices provided with web page browsing functions, and hence, users in this information-exploded age can receive the most updated information through internet, any time and any where, without being limited by time and locations.

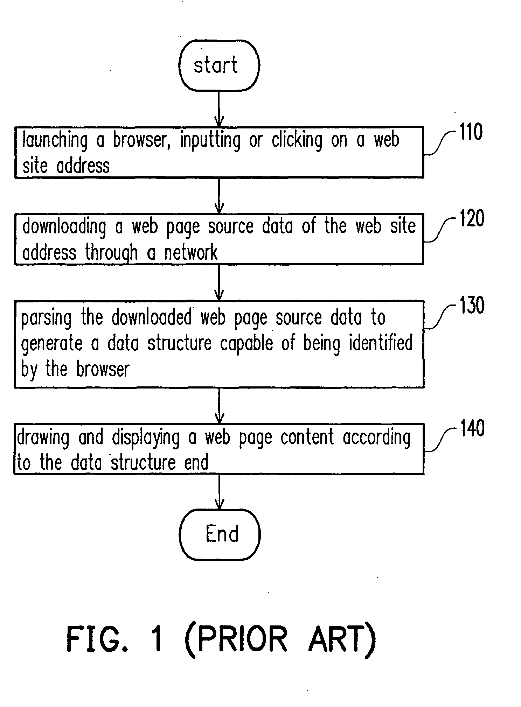

When using mobile electronic devices, such as, mobile phones, personal digital assistants (PDAs) or smartphones, steps executed to browse web page contents via browsers on the mobile electronic devices are the same as those executed to browse web page contents via browsers on computers. Fig. 1 is a flow chart of browsing web page in the conventional art. Referring to Fig. 1, when a user launches a browser for inputting or clicks on a web site address (step 110), the browser downloads web page source data of the web site address, such as web page original files, pictures or the like from the web. Then, the browser parses the downloaded web page source data to generate a data structure capable of being identified by the browser (step 130). In other word, at this time, the browser obtains all detailed description about how to display the web page content. Finally, the browser draws and displays the web page content according, to the parsed data structure (step 140).

However, since the mobile electronic devices provided with the web browsing functions are limited by hardwares, such as processors and memories, the processing speed thereof is much slower than common computer systems. Accordingly, when users use mobile electronic devices for web browsing, it usually causes negative impressions to users due to slow speed.

### SUMMARY OF THE INVENTION

A method for preprocessing and displaying a web page is provided. With preprocessing, speed of displaying specific web page content on a mobile electronic device is improved.

A mobile electronic device automatically preprocessing a specific web site address configured by a user according to an update rule to quickly open the web page content is provided.

An operation interface of a mobile electronic device for enhancing a user's convenience of browsing a specific web page is provided.

A method for preprocessing and displaying a web page is provided, which is applied to a mobile electronic device. Firstly, the method defines an interested web site address. The interested web site address corresponds to an update rule. Then, the method downloads a web page source data of the interested web site address according to the update rule and stores the web page source data or a data structure generated by parsing the web page source data. The data structure is capable of being displayed by the browser. When the interested web site address is selected, the browser parses the web page source data or displays a web page content of the interested web site address according to the data structure.

An exemplary mobile electronic device includes a frequently-linked web site address list, recording at least one frequently-linked web site address. The step of defming the interested web site address includes, when a frequently-linked web site address is selected, configuring the selected frequently-linked web site address as the interested web site address.

In an exemplary method, the step of defining the interested web site address includes, when a web site address string is inputted, configuring the web site address string as the interested web site address.

An exemplary mobile electronic device displays a web page having at least one hyper-link. The step of defining the interested web site address includes, when a hyper-link is selected, configuring a web site address directed to by the hyper-link as the interested web site address.

An exemplary method further includes displaying at least one of a progress of downloading the web page source data of the interested web site address and a mark of downloading completion.

In an exemplary method, the step of downloading the web page source data of the interested web site address includes at least one of the following steps: downloading the web page source data once the interested web site address is defined, and downloading the web page source data according to at least one of a configured starting time, a configured ending time and an configured update cycle.

In an exemplary method, the step of downloading the web page source data according to at least one of the starting time, the ending time and the update cycle includes, when according to the starting time, allowing downloading the web page source data at the starting time, when according to the ending time, terminating downloading the web page source data at the ending time, and when according to the update cycle, allowing downloading the web page source data upon the update cycle being arrived or expired.

In an exemplary method, the step of displaying the web page content of the interested web site address includes displaying a time length from current time point to the latest downloading of the web page source data.

In another aspect, an exemplary mobile electronic device, including a displaying unit, a storing unit, web page browsing module and a processing module is provided. The web page browsing module is used to control a browser, and the processing module is used to obtain a defined interested web site address. The interested web site address corresponds to an update rule. The processing module downloads a web page source data of the interested web site address according to the update rule and stores the web page source data or a data structure generated by parsing the web page source data in the storing unit. The data structure is capable of being displayed by the browser. When the web page browsing module detects the interested web site address being selected, the web page browsing module controls the browser to parse the web page source data stored in the storing unit or to display the web page content of the interested web site address by the displaying unit according to the data structure stored in the storing unit.

An exemplary mobile electronic device further includes an interested web site address configuring module, used to define a selected web site address as the interested web site address when the web site address is selected. The selected web site address is located in a frequently-linked web site address list or an input web site address string. In addition, the interested web site address configuring module is used to configure a web site address directed to by a hyper-link as the interested web site address when the hyper-link is selected. The hyper-link is located in a web page displayed by the displaying unit.

In an exemplary device, the processing module displays at least one of a progress of downloading the web page source data and a mark of downloading completion by the displaying unit.

In an exemplary device, the processing module executes at least one of the following operations: downloading the web page source data of the interested web site address once the interested web site address is defined, and downloading the web page source data according to at lest one of a starting time, a ending time, and a update cycle.

In an exemplary device, when according to the starting time, the processing module allows downloading the web page source data at the starting time. When according to the ending time, the processing module terminates downloading the web page source data at the ending time. When according to the update cycle, the processing module allows downloading the web page source data upon the update cycle being arrived or expired.

In an exemplary device, when displaying a web page content of the interested web site address, the browser displays a time length from current time point to the latest time point of downloading the web page source data.

In yet another aspect, an exemplary operation interface of a mobile electronic device, including an interested web site address linking area, corresponding to an interested web site address. The interested web site address corresponds to a storing area in a storing unit of the mobile electronic device. The storing area stores a web page source data of the interested web site address or a data structure generated by parsing the web page source data. The data structure is capable of being displayed by a browser. The web page source data is downloaded via network according to an update rule corresponding to the interested web site address. When the interested web site address linking area is selected, the mobile electronic device parses the web page source data stored in the storing unit or displays a web page content of the interested web site address according to the data structure stored in the storing unit.

An exemplary operation interface further comprises at least one of a frequently-linked web site address list linking area, a string inputting area, and a hyper-link pre-downloading and marking area. When the frequently-linked web site address list linking area is selected, it displays the frequently-linked web site address list including at least one frequently-linked web site address. When the frequently-linked web site address is selected, the frequently-linked web site address is defined as the interested web site address. The string inputting area is used to receive an input web site address string and define the input web site address string as the interested web site address. The hyper-link pre-downloading and marking area is corresponding to a hyper-link. The hyper-link is located in a web page displayed in the mobile electronic device. When the hyper-link pre-downloading and marking area is selected, the web site address directed to by the hyper-link is defined as the interested web site address. The hyper-link pre-downloading and marking area displays an icon or a selection box.

An exemplary operation interface further displays the interested web site address linking area, corresponding to the defined interested web site address.

An exemplary operation interface further includes a frequency setting area, used to configure at least one of a starting time, an ending time and an update cycle as an update rule. When the update rule includes the starting time, downloading the web page source data is allowed at the starting time. When the update rule includes the ending time, downloading the web page source data is terminated at the ending time. When the update rule includes the update cycle, downloading the web page source data is allowed upon the update cycle being arrived or expired.

An exemplary operation interface further includes an updated information displaying area, used to show a time length from current time point to the latest time point of downloading the web page source data.

In an exemplary operation interface, on the interested web site address linking area, at least one of a web site address string, a web page name, an icon, a mark of downloading completion and a downloading progress chart of the interested web site address is displayed.

In view of the foregoing, a user is allowed to define his/her interested web site address in which he/she is interested by himself/herself. Before the user selects the interested web site address, the mobile electronic device automatically downloads and parses the web page source data of the interested web site address according to the update rule. Furthermore, when the user selects the interested web site address, the browser is launched and the data structure stored in the mobile electronic device is referred to directly, parsed and stored so that the web page content can be quickly displayed. As such, the efficiency of web browsing by the mobile electronic device is enhanced.

To make the above features and advantages more comprehensible, disclosure accompanied with drawings is described in detail as follows.

### BRIEF DESCRIPTION OF THE DRAWINGS

The accompanying drawings are included to provide a further understanding of the disclosure, and are incorporated in and constitute a part of this specification. The drawings illustrate examples and, together with the description, serve to explain the principles of the disclosure.

Fig. 1 is a flow chart of browsing web in the conventional art.

Fig. 2 is a block drawing showing an exemplary mobile electronic device.

Fig. 3 is a flow chart showing an exemplary method for preprocessing and displaying a web page.

Fig. 4 is a scheme view showing an exemplary operation interface of a mobile electronic device.

Fig. 5 is a scheme view showing an exemplary web page content.

### DETAILED DESCRIPTION

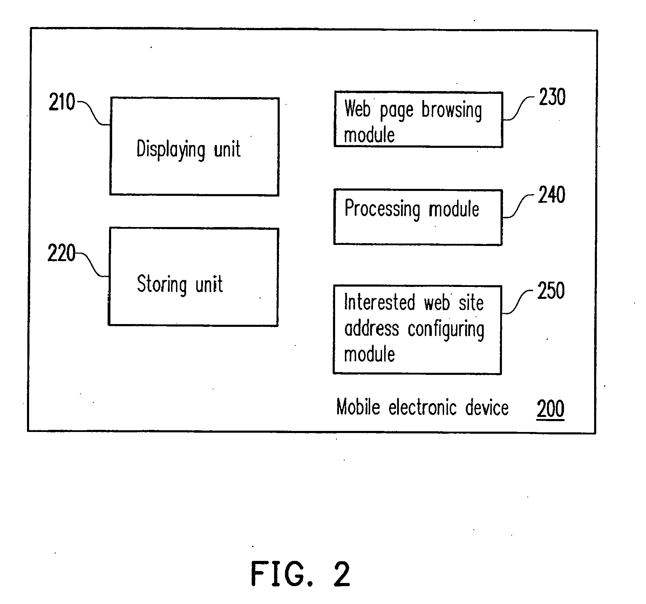

Fig. 2 is a block drawing showing an exemplary mobile electronic device. Referring to Fig. 2, a mobile electronic device 200 includes a displaying unit 210, a storing unit 220, a web page browsing module 230, a processing module 240 and an interested web site address configuring module 250. The exemplary mobile electronic device 200 is, for example, a mobile phone, a personal digital assistant (PDA), a PDA mobile phone or a smartphone provided with network connection function and web page browsing function, which the scope thereof is not limited to hereinafter.

The displaying unit 210 is, for example, a liquid crystal display (LCD), a resistive touch screen or a capacitive touch screen, and used to display an operation interface of the mobile electronic device 200. The storing unit 220 could be hard disk or memory. The web page browsing module 230 includes any hardware component, software component or combination of the both that is required for providing a web page browsing function. The exemplary web page browsing module 230 controls the browser to be opened and closed. The processing module 240 is, for example, any type of processor or chip set, which is provided with processing ability.

A user configures web site addresses that he/she is interested in or he/she needs to brows frequently as interested web site addresses via the exemplary interested web site address configuring module 250, and configures an update rule corresponding to each of the interested web site addresses. The processing module 240 downloads a web page source data of the interested web site addresses periodically to the storing unit 220 according to the update rule corresponding to each of the interested web site addresses. When the user needs to browse a content of the interested web site address and clicks on the interested web site address, the web page browsing module 230 controls the browser to parse the web page source data in the storing unit 220 so as to quickly display the web page content of the interested web site address on the displaying unit 210. In another example, after the exemplary processing module 240 downloads the web page source data of the interested web site address, the web page source data is further parsed as a data structure that is capable of being displayed by the browser, and the parsed data structure is stored in the storing unit 220. When the user needs to browse a content of the interested web site address and clicks on the interested web site address, the web page browsing module 230 controls the browser to directly refer the web page source data in the storing unit 220 without parsing the web page source data so that the web page content of the interested web site address can be quickly displayed on the displaying unit 210.

Further, the mobile electronic device 200 allows the user to configure at least one interested web site address in advance, and automatically preprocesses the interested web site address without opening the interested web site address to generate the web page source data capable of being parsed by the browser, or the data structure capable of being displayed by the browser. It should be noted that the mobile electronic device 200 preprocesses the aforementioned operations in background, and thus, in the meantime, the user can still use other functions of the mobile electronic device 200 freely. The mobile electronic device 200 prepares the web page source data or the data structure corresponding to the interested web site address in advance before the user is about to open the interested web site address. When the user actually clicks on the interested web site address, the web page source data or the data structure is quickly provided to the browser so that the web page content of the interested web site address is quickly displayed. Hence, the time period from the user clicking on the interested web site address to the web page content being completely displayed is significantly shortened, and accordingly, the convenience of web browsing via the mobile electronic device 200 can be improved.

In order to describe operation steps of each module of the exemplary mobile electronic device 200 in more detail, another example will be illustrated hereinafter.

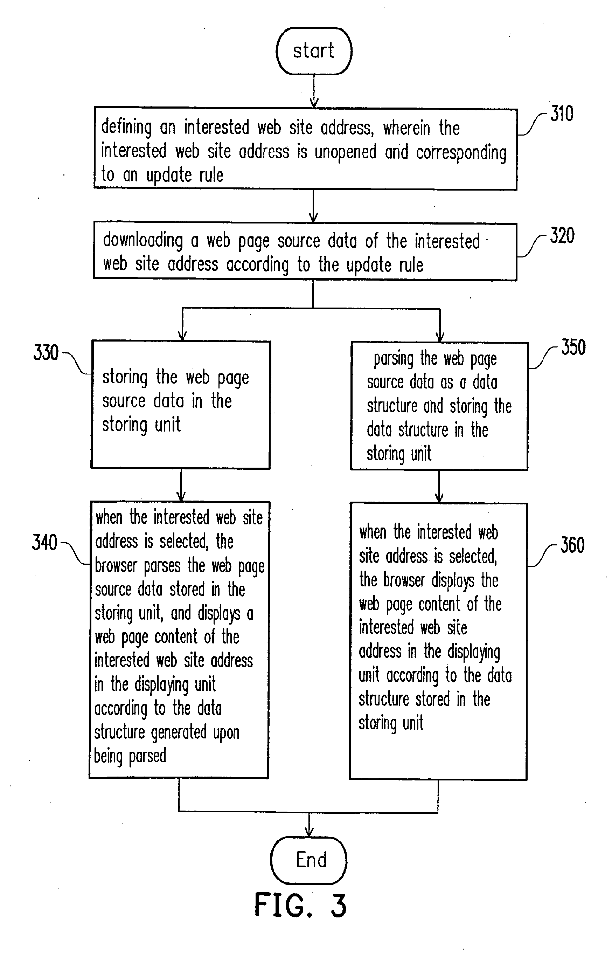

Fig. 3 is a flow chart showing an exemplary method for preprocessing and displaying a web page. Referring to both Fig. 2 and Fig. 3, firstly, as shown in step 310, a user proceeds with configuration via the interested web site address configuring module 250 to define one or more interested web site addresses. For example, the mobile electronic device 200 includes a frequently-linked web site address list (e.g. web site address bookmark). The frequently-linked list is edited by the user or generated by recording web site addresses frequently linked by the user. When the interested web site address configuring module 250 receives a selection instruction from the user selecting any frequently-linked web site address in the frequently-linked web site address list, the selected frequently-linked web site address is defined as the interested web site address. In addition, the interested web site address configuring module 250 obtains a web site address string input by the user to configure the web site address string as the interested web site address. It should be noted that the user can define the interested web site address via the interested web site address configuring module 250 without activating the browser or open the web site address. Each of the interested web site addresses being defined corresponds to an update rule, respectively. The update rule is, for example, a rule predetermined by the mobile electronic device 200 or configured by the user. A method for configuring the update rule will be described hereinafter. All defined interested web site addresses are, for example, displayed in a format of an interested web site address list by the displaying unit 210 for the user to view conveniently.

Next, in step 320, the processing module 240 downloads the web page source data of the interested web site address via network according to the update rule corresponding to the interested web site address. In an example, next, as shown in step 330, the web page source data is stored in the storing unit 220. In the mean time when downloading the web page source data, a progress of downloading the web page source data is displayed in the displaying unit 210. The web page source data includes as least one of web page source files, picture files, music files and image files, for example. The web page source files are, for example, a HyperText Markup Language (HTML) files, or Extensible Markup Language (XML) files. The web page source files are generated when web page developers design and plan web page contents, which can be parsed by the browser so as to build up a data structure. Accordingly, the web page content is displayed according to the data structure.

Then, in step 340, when the web page browsing module 230 detects that the user select any of the interested web site address, the web page browsing module 230 controls the browser to parse the web page source data stored in the storing unit 220. After that, the browser 220 displays the web page content of the interested web site address on the displaying unit 210 according to the data structure generated upon being parsed. For example, the data structure illustrates a corresponding relationship between each web component and its displaying position. For example, via information provided the data structure, the browser can learn the displaying positions on the web page of the web components, such as all kinds of written characters, table frames, buttons, dialog boxes, plug-in programs, picture files, music file and image files. In the present example, the content stored in the storing unit 220 is the web page source data downloaded in step 320. In this case, the storing unit 220 is, for example, a non-volatile memory, such as hard disk, flash memory or the like. Meanwhile, web page source data of various interested web site addresses can be stored in various pages in the storing unit 220.

In addition, when the browser displays the web page content of the interested web site address, for example, the browser can display a time length from current time point to the latest time point of downloading the web page source data, so that the user determines on his/her own whether the web page content is time effectiveness. In the present example, the browser is being closed and is not launched by the web page browsing module 230 until the user selects the interested web site address in step 340.

In another example, following step 320 is step 350, as shown. In order to save time spent taken by the browser on parsing the web page source data, the processing module 240 parses the downloaded web page source data as the data structure in advance, which is capable of being read and displayed by the browser. In the same way, the processing module 240 stores the data structure being parsed in the storing unit 220. The storing unit 220 is a non-volatile memory, such as a dynamic random access memory, a flash memory or the like. And, data structure of various interested web site addresses can be stored in various pages in the storing unit 220.

The data structure described in step 350 and that described in step 340 can be the same type of data structure. Thus, in step 360, when the web page browsing module 230 detects that the user select any of the interested web site addresses, the web page browsing module 230 controls the browser to display the web page content of the interested web site address by the displaying unit 210 directly according to the data structure stored in the storing unit 220 without spending time on waiting for the browser to parse the web page source data. Therefore, the web page content of the interested web site address can be quickly browsed. In the method as shown in Fig. 3, the user defines one or more interested web site addresses in the mobile electronic device 200. The processing module 240 downloads the web page source data according the update rule of each of the interested web site address. That is, by steps described as above, the web page source data or the data structure respectively corresponding to each of the interested web site addresses is recorded in the storing unit 220.

The exemplary update rule as described in the above is, for example: 1. when any web site address is marked as the interested web site address, the processing module 240 immediately downloading the web page source data of the web site address, or 2. instructing the processing module 240 to proceed with downloading according to at least one of a starting time, an ending time and an update cycle, which is configured by the user. Furthermore, when the update rule includes according to the starting time, the processing module 240 starts to download the web page source data at the starting time. When the update rule includes according to the ending time, the processing module 240 terminates downloading the web page source data at the ending time. When the update rule includes according to the update cycle, the processing module 240 downloads the web page source data every time when the update cycle is arrived or expired. In an example, the processing module 240 downloads the web page source data of the interested web site address to the storing unit 220 whenever the update cycle is arrived between the starting time and the ending time. Given that the starting time input by the user is 8 AM of weekdays, the ending time is 12 PM of weekdays, and the update cycle is 2 hours, then the processing module 240 downloads the web page source data every 2 hours between 8 AM and 12 PM from Monday to Friday so that the user obtains the latest updated web page content while reading the web page of the interested web site address.

Besides, at every time when the mobile electronic device 200 is activated (e.g. being reset), the processing module 240 determines whether the time length from current time point to the latest time point of downloading the web page source data of the interested web site address arrives or expires the update cycle. If the update cycle is arrived, it indicates that the web page source data stored in the storing unit 220 is not able to effectively reflect the content of the interested web site address at that time. Therefore, the processing module 240 downloads the web page source data of the interested web site address again to storing unit 220. However, if the update cycle is not arrived, it indicates that the previously recorded data structure still has reference value. Therefore, the processing module 240 uses the web page source data or the data structure stored in the storing unit 220 so that the browser directly displays the web page content of the interested web site address when the user clicks on the interested web site address. In other words, the mobile electronic device 200 automatically completes downloading the interested web site address without the user's opening the browser when the mobile electronic device 200 is re-activated.

As described above, for users who are used to browse some specific web pages, they can configure the web site addresses of the web pages as the interested web site addresses. The web page source data of the interested web site addresses and/or the data structure parsed from the web page source data is preprocessed to be completed in background (the users at this time is, for example, executing other functions or browsing other web page contents). When the user clicks on the interested web site address to open the browser, the browser directly reads the web page source data or the data structure ready for being provided any time from the storing unit 220 of the mobile electronic device 200 so as to display the web page content of the interested web site address. That is, upon the user clicking on the interested web site address, he/she does not need to spend time and wait for the browser downloading the web page source data, or even parsing the web page source data.

In another example, when the user browses any web page content displayed by the displaying unit 210, and founds himself/herself interested in any hyper-link included in the web page content, expected to be browsed later, he/she can configure the web site address directed to by the hyper-link as the interested web site address. In more detail, the user can select the hyper-link for generating a selection instruction. It should be noted that the hyper-link is not open yet at this time. Upon the interested web site address configuring module 250 receiving the selection instruction, it defines the web site address directed to by the selected hyper-link as the interested web site address. Since the web site address directed to by the hyper-link is marked as the interested web site address for the first time, according to the first update rule as previously mentioned, the processing module 240 downloads the web page source data of the web site address in advance to the storing unit 220. In an example, the hyper-link, of which the web page source data is displayed, is labeled with a special mark thereon or therearound for being shown to the user. Afterward, when the user clicks on the hyper-link labeled with the special mark or on the special mark itself, the web page browsing module 230 controls the browser to directly refer to the content of the storing unit 220 so as to open the web page content of the web site address directed to by the hyper-link.

In other words, when the user browses the web page content including a plurality of hyper-links, he/she configures the web site addresses directed to by the hyper-links as the interested web site addresses. By this way, before opening the hyper-links, the mobile electronic device 200 downloads the web page source data of the hyper-links in advance in background. As such, the user can select a plurality of hyper-links that are desired to browse in advance on one web page. Then, the web page content of the hyper-links can be quickly opened and displayed so as to provide the user with experiencing more convenient web page browsing.

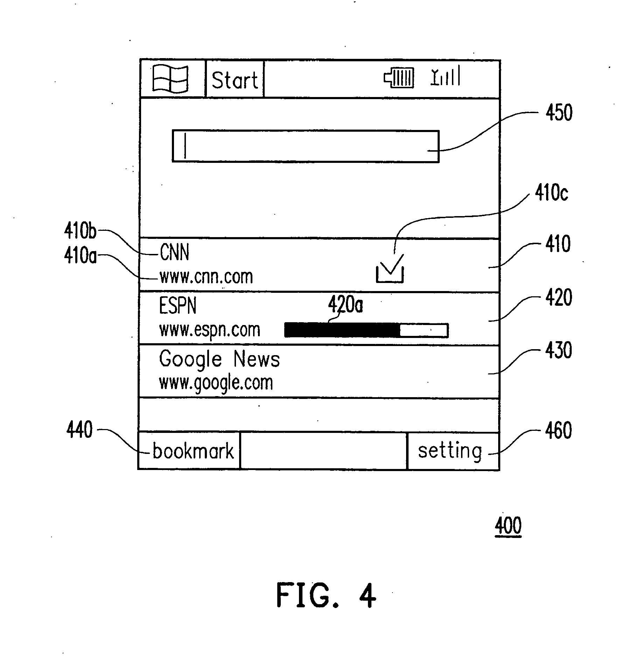

An exemplary operation interface of the mobile electronic device is further provided. Fig. 4 is a scheme view showing an exemplary operation interface of the mobile electronic device. Referring to Fig. 4, an operation interface 400 includes one or more interested web site addresses linking areas, for example, interested web site address linking area 410, interested web site address linking area 420 and interested web site address linking area 430. In other words, all interested web site address linking areas corresponding to interested web site addresses defined by a user could be displayed in the operation interface 400. On each of the interested web site address linking areas, at least one of a web site address string of the interested web site address (e.g. 410a), a web page name of the interested web site address (e.g. 410b), an icon of the interested web site address (not shown), a mark of downloading completion (e.g.. 410c) and a progress chart of downloading progress (e.g. 420a) is displayed on the interested web site address linking area.

In more detail, each of the interested web site address linking areas respectively corresponds to an interested web site address (the interested web site address is, for example, unopened yet). The interested web site address corresponds to the storing area in the storing unit. The content stored in the storing area is used by the browser of the mobile electronic device so as to display the web page content of the interested web site address. Furthermore, the content stored in the storing area is, for example, the web page source data downloaded via network according to the update rule corresponding to the interested web site address, or the data structure generated by parsing the web page source data. The so-called update rule has been previously illustrated with examples and will be no longer described hereinafter.

For example, the interested web site address corresponding to the interested web site address linking area 410 is www.cnn.com. And in the storing unit (such as hard disk or memory) of the mobile electronic device, there is a storing area used for storing the web page source data downloaded from the web site address www.cnn.com according to the update rule , or the data structure parsed from the web page source data of the web site address www.cnn.com. When the browser detects that the interested web site address linking area 410 is selected by the user, the browser directly refers to the content in the storing area so as to open and display the web page content of the interested web site address.

In the present example, the operation interface 400 further includes a frequently-linked web site address list linking area 440, used to receive a selection instruction from the user so as to display a frequently-linked web site address list containing at least one frequently-linked web site address. Each of the frequently-linked web site addresses has a selection interface (e.g. a checking box) for the user to choose. When the selection interface is chosen by the user, the frequently-linked web site address is defined as the interested web site address. In addition, the operation interface 400 further includes a string inputting area 450 capable of receiving a web site address string input by the user. Then, the input web site address string is defined as the interested web site address.

The operation interface 400 further includes a frequency setting area 460, used to display a frequency setting screen when receiving the selection instruction generated by the user. The user configures at least one of the starting time, ending time and the update cycle via the frequency setting screen. In the present example, the update rule is defined according to the data input by the user as downloading the web page source data whenever the update cycle is arrived between the starting time and the ending time.

It should be noted that the operation interface 400 is only an example and is not limited to the deployment and arrangement of each interested web site address linking area, frequently-linked web site address list linking area, string inputting area, and the frequency setting area.

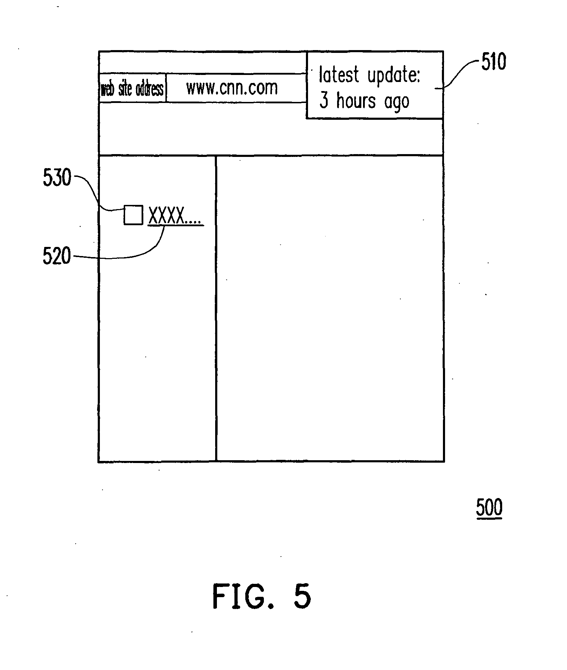

In an example, when the user clicks on an interested web site address linking area (for example, the interested web site address linking area 410), the web page content displayed by the browser with reference to the content of the storing area corresponding thereto is the web page content as shown in Fig. 5. The web page content 500 includes an updated information displaying area 510 used to show the time length from current time point to the latest time point of downloading the web page content 500 in the mobile electronic device while the browser is displaying the web page content 500 of the interested web site address (i.e. www.cnn.com).

It should be noted that, while the mobile electronic device displaying the web page content (for example, the web page content 500), if the web page content includes one or more hyper-links (for example, the hyper-link 520), each of the hyper-links has a hyper-link pre-downloading and marking area respectively corresponding thereto (for example, hyper-link pre-downloading and marking area 530). The hyper-link pre-downloading and marking area displays an icon or a checking box, which is not limited to herein. When the hyper-link pre-downloading and marking area receives the selection instruction from the user, the web site address directed to by the hyper-link is defined as the interested web site address. It should be noted that the displaying area or style of the hyper-link pre-downloading and marking area on the web page content is not limited by the example.

The exemplary operation interface of the mobile electronic device not only allows the user to select the interested web site address from the frequently-link web site addresses usually browsed by the user but also supports inputting of the web site address string of the interested web site address. Even when the web page content being browsed, the web site address directed to by the hyper-link is defined as the interested web site address. The mobile electronic device timely downloads the web page source data of the interested web site addressed or the data structure parsed therefrom according to the update rule of each of the interested web site addresses. After the user selects the interested web site address linking area corresponding to the interested web site address, the web page content of the selected interested web site address is displayed directly according to the web page source data or the data structure. Thus, the speed and convenience of browsing the interested address via the mobile electronic device can be enhanced.

In view of the foregoing, the exemplary method for preprocessing and displaying web pages, the exemplary mobile electronic device and the exemplary operation interface allow the user to set up interested web site address that he/she is concerned with. Before the user actually clicks on and opens the interested web site address, the web page source data of the interested web site address is downloaded to the mobile electronic device according to the update rule, which is then parsed as the data structure capable of being displayed by the browser. When the user clicks on the interested web site address afterwards, the browser refers to the web page source data or the data structure stored in the mobile electronic device to display the web page content. Thereby, time from the user clicking on the interested web site address to the web page content being displayed is significantly shortened, and the efficiency of browsing the web is improved.

Those skilled in the art will readily observe that numerous modifications and alterations of the device and method may be made while retaining the teachings and without departing from the spirit and scope. Accordingly, the above disclosure should be construed as limited only by the metes and bounds of the appended claims.

## Claims

1. A method for preprocessing and displaying web page, for a mobile electronic device (200), the method comprising:
defining an interested web site address, wherein the interested web site address corresponds to an update rule (310);
downloading a web page source data of the interested web site address according to the update rule (320);
storing the web page source date or a data structure generated by parsing the web page source data (330, 350), wherein the data structure is capable of being displayed by a browser; and
the browser parsing the web page source data or displaying a web page content of the interested web site address according to the data structure when the interested web site address is selected (340, 360).

2. The method for preprocessing and displaying web page according to claim 1,
wherein the step of defining the interested web site address comprises at least one of the following steps:
configuring a frequently-linked web site address in a frequently-linked web site address list of the mobile electronic device (200) as the interested web site address, when the frequently-linked web site address is selected;
configuring an web site address string as the interested web site address when the web site address string is inputted; and
configuring a web site address directed to by a hyper-link of a web page displayed by the mobile electronic device (200) as the interested web site address when the web site address directed to by the hyper-link is selected.

3. The method for preprocessing and displaying web page according to claim 1, further comprising:
displaying at least one of a progress of downloading the web page source data (420a) of the interested web site address and a mark of a downloading completion (410c).

4. The method for preprocessing and displaying web page according to claim 1,
wherein the step of downloading the web page source data of the interested web site address according to the update rule comprises at least one of the following steps:
downloading the web page source data once the interested web site address is defined; and
downloading the web page source data according to at least one of a starting time, a ending time and a update cycle.

5. The method for preprocessing and displaying web page according to claim 4,
wherein the step of downloading the web page source data according to at least one of the starting time, the ending time and the update cycle comprises:
starting downloading the web page source data at the starting time when according to the starting time;
terminating downloading the web page source data at the ending time when according to the ending time; and
downloading the web page source data upon the update cycle being arrived or expired when according to the-update cycle.

6. A mobile electronic device (200) comprising:
a displaying unit (210);
a storing unit (220);
a web page browsing module (230) for controlling a browser; and
a processing module (240) for obtaining a defined interested web site address,
wherein the interested web site adderess corresponds to an update rule, the processing module (240) downloads a web page source data of the interested web site address according to the update rule, and stores the web page source data or a data structure generated by parsing the web page source data in the storing unit (220), the data structure is capable of being displayed by the displaying unit (210), and
the web page browsing module (230) controls the browser to parse the web page source data in the storing unit (220) or to display a web page content of the interested web site address in the displaying unit (210) according to the data structure stored in the storing unit (220) when the web page browsing module (230) detects that the interested web site address is selected.

7. The mobile electronic device (200) according to claim 6, further comprising:
an interested web site address configuring module (250) for defining a selected web site address as the interested web site address when the web site address is selected.

8. The mobile electronic device (200) according to claim 9, wherein the selected web site address is at least one of a frequently-linked web site address in a frequently-linked web site address list, an input web site address string or the web site address directed to by a hyper-link in a web page.

9. The mobile electronic device (200) according to claim 6, wherein the processing module (240) displays at least one of a progress of downloading the web page source data of the interested web site address and a mark of a downloading completion in the displaying unit (210).

10. The mobile electronic device (200) according to claim 6, wherein the processing module (240) executes at least one of the following downloading according to the update rule:
downloading the web page source data once the interested web site address is defined; and
downloading the web page source data according to at least one of a starting time, a ending time or a update cycle.

11. The mobile electronic device (200) according to claim 10, wherein the processing module (240) allows downloading the web page source data at the starting time when according to the starting time; the processing module (240) terminates downloading the web page source data at the ending time when according to the ending time; and the processing module (240) allows downloading the web page source data upon the update cycle being arrived or expired when according to the update cycle.

12. An operation interface (400) of a mobile electronic device (200), comprising:
an interested web site address linking area (410, 420, 430), corresponding to an interested web site address, wherein
the interested web site address corresponds a storing area in a storing unit (220) of the mobile electronic device (200),
the storing area stores a web page content of the interested web site address or a data structure generated by parsing the web page source data,
the data structure is capable of being displayed by a browser,
the web page source data is downloaded via network according to an update rule corresponding to the interested web site address, and
the mobile electronic device (200) parses the web page source data in the storing unit (220) or displays a web page content of the interested web site address according to the data structure stored in the storing unit (220) when the interested web site address linking area (410, 420, 430) is selected.

13. The operation interface (400) of a mobile electronic device (200) according to claim 12, further comprising at least one of a frequently-linked web site address list linking area (440), a string inputting area (450), and a hyper-link pre-downloading and marking area (530),
wherein the frequently-linked web site address list linking area (440) is for displaying the frequently-linked web site address list comprising at least one frequent-linked web site address when frequently-linked web site address list linking area (440) is selected, and the frequently-linked web site address is defined as the interested web site address when the frequently-linked web site address is selected,
the string inputting area (450) is for receiving an a web site address string and defining the web site address string as the interested web site address,
the hyper-link pre-downloading and marking area (530) is corresponding to a hyper-link (520), wherein the hyper-link (520) is located in a web page displayed in the mobile electronic device (200), and a web site address directed to by the hyper-link (520) is defined as the interested web site address when the hyper-link pre-downloading and marking area (530) is selected..

14. The operation interface (400) of a mobile electronic device (200) according to claim 12, further comprising:
a frequency setting area (460), for configuring at least one of a starting time, an ending time and an update cycle as an updating rule, wherein
the web page source data is started to be downloaded at the starting time when the update rule comprises the starting time,
the web page source data is terminated to be downloaded at the ending time when the update rule comprises the ending time, and
the web page source data is downloaded upon the update cycle being arrived or expired when the update rule comprises the update cycle.

15. The operation interface (400) of a mobile electronic device (200) according to claim 12, further comprising:
an updated information displaying area (510), used to displaying a time length from current time point to the latest time point of downloading the web page source data when displaying the web page content of the interested web site address.
